# EUROPEAN PATENT APPLICATION

(11) **EP 3 935 996 A1**
(43) Date of publication of application: **12.01.2022**
(21) Application number: 20184282.0
(22) Date of filing: 06.07.2020
(51) Int. Cl.: A45D 34/04, A45D 40/26, A46B 9/02, A46B 9/00, A46D 1/00, B29C 64/00

(54) **APPLICATOR FOR APPLYING A COSMETIC OR HEALTHCARE MASS**

(71) Applicant: GEKA GmbH, 91572 Bechhofen (DE)
(72) Inventor: VON JAN, Erika, 91154 Roth (DE); BISTER, Viet Huong, 91522 Ansbach (DE)
(74) Representative: Misselhorn, Hein-Martin

(57) **Abstract**

An applicator for applying a cosmetic or healthcare mass onto the hair or skin, comprising bristles, said bristles comprising a portion having a crescent-shaped cross section, as well as to a cosmetic or health care package comprising the inventive applicator and a process for producing said applicator.

## Description

### BACKGROUND OF THE INVENTION

The present invention relates to an applicator for applying a cosmetic or healthcare mass onto the hair or skin, comprising bristles, said bristles comprising a portion having a crescent-shaped cross section, as well as to a cosmetic or health care package comprising the inventive applicator and a process for producing said applicator.

In the field of applicators with bristles, the common applicators either have a wire-core wherein bristles in the form of short filaments are clamped between two core wires twisted together, or they are injection-molded applicators, wherein the core of the applicator is produced with the bristles formed thereon by means of injection molding. An individual bristle cavity is thereby provided for each bristle, in which the plastic material is enclosed for forming the bristle.

A significant problem of the present applicators is that the surface of the bristles is quite smooth and therefore the storage capacity for the corresponding cosmetic mass remains limited. For this reason, it has previously typically been attempted to improve the storage capacity by means of the spaces between the bristles. Reservoirs are created between the bristles in which increased amounts of mass can be stored. On the other hand, EP3515245A1 proposes an applicator having bristles wherein the surface of the bristles is micro-structured. The micro-structuring of said bristles is based on a plurality of grains protruding haphazardly from the bristle core in the region of the micro-structured surface. However, the disadvantage of this technology is the difficulty to define micro-structured bristles capable to provide a correct balance between the amount of mass picked-up by the applicator and the amount of mass applied on the surface to be applied.

More recent technologies describe applicators prepared via an Additive Manufacturing (AM) process. Applicators with complex shapes can be produced by said process. EP2120631B1 describes a method for the preparation of applicators by Additive Manufacturing (AM) process. For example, applicators produced by a layer-by-layer deposition of a material, and solidification of a specific area of said material layers to obtain the resulting applicator. However, EP2120631B1 is silent about how to produce applicators by Additive Manufacturing (AM) process that are capable to provide a correct balance between the amount of mass picked-up by the applicator and the amount of mass applied on the surface to be applied.

Therefore, it is desirable to provide an improved applicator comprising bristles capable to overcome the above-mentioned problem, especially an applicator having complex architectures that can be produced without the limitation of molds and its related costs needed to produce an applicator.

### SUMMARY OF THE INVENTION

Starting from this state of the art, it is an object of the invention to provide an applicator comprising bristles that provide improved pick-up properties and an even application of the product.

According to the present invention, these objects are achieved by an applicator (1) for applying a cosmetic and/or healthcare mass onto the hair or skin, comprising a core (2) of elongated shape that carries bristles (3) which are integrated to the core, the bristles being distributed along the core and axially spaced apart from one another, wherein a portion (4) of the bristles comprises a crescent-shaped cross section (5).

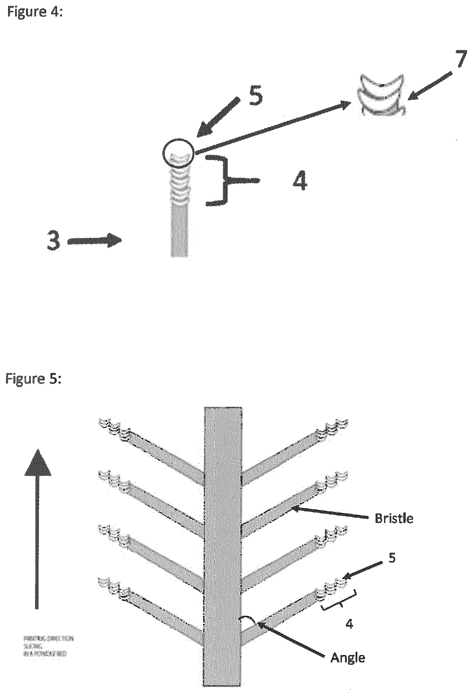

In a preferred embodiment, the portion (4) of the bristles comprising a crescent-shaped cross section (5) is formed at the end of the bristle opposite to the core and/or on bristles forming an angle in the range of between 25° to 80°, measured taking the longitudinal axis of the core as a base. It is understood that the applicator (1) is seen in a vertical position and that its bristles are pointing up on the direction of the upper side of the applicator (1) as in Figure 5. This provides a better placement of the reservoirs improving the application of the cosmetic mass on the application surface, for example on eyelashes.

The inventors have surprisingly found that the applicator according to the present invention provides favourable pick-up properties of the cosmetic or healthcare mass to be applied, as well as, favourable even application of the mass to be applied on the hair or skin. The inventors have found that by creating the crescent-shaped cross section, tailored reservoirs are created on the bristle and a balance of favourable properties may be achieved.

The present invention also relates to an additive manufacturing process for producing the applicator according to the present invention, comprising the steps of:
a) preparation of a digital three-dimensional model of the applicator,
b) distribution of a powder resin layer on a fusing bed,
c) fusing selective regions of the powder resin layer, in a layer by layer basis, by means of applying a heat source on the selective regions of the powder resin layer to form a solid applicator, wherein the heat source applied on the selective regions of the powder resin layers has a power in the range of 12 to 30 W.

General additive manufacturing steps are known, for example, from 3D PRINTING AND ADDITIVE MANUFACTURING: PRINCIPLES AND APPLICATIONS, Chee Kai Chua and Kah Fai Leong, 2014. ISBN-10: 9814571407.

The inventors have found that the additive manufacturing process for producing the applicator according to the present invention, provides a more easy and flexible process that allows the preparation of more complex architectures compared to processes known in the art. Additionally, the inventors have also found that the additive manufacturing process for producing the applicator according to the present invention, allows the preparation of bristles and applicators having better surface properties due to the orientation of the heating source during the fusing of selective regions of the powder resin layer.

### BRIEF DESCRIPTION OF THE DRAWINGS

The invention will be explained in more detail hereinafter with reference to various embodiments of the invention as well as to the drawings. The schematic drawings show the following:
- Fig. 1: shows a schematic view of an embodiment of bristles (3) according to the invention having a crescent-shaped cross-section (5) in all the extension of the bristle (3a).

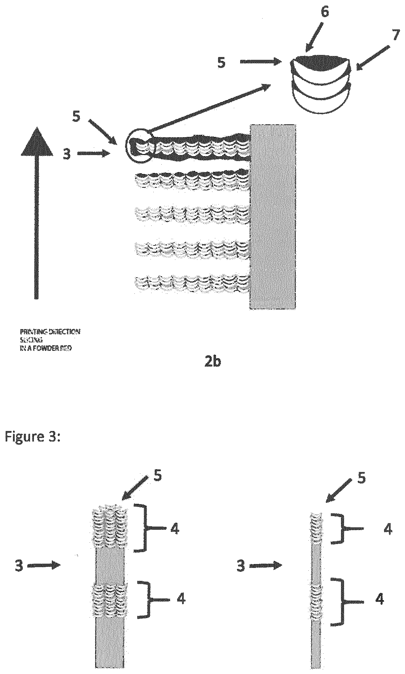

- Fig. 2: shows a schematic view of an embodiment of bristles (3) according to the invention having a crescent-shaped cross section (5) in all the extension of the bristle (3) and having a cosmetic or health mass, to be applied onto the hair or skin, in the reservoir (7).
- Fig. 3: shows a schematic view of an embodiment of bristles (3) according to the invention having a crescent-shaped cross section (5) in one portion (4) of the bristle (3).
- Fig. 4: shows a schematic view of the reservoir (7) formed on the portion (4) of the bristle (3) comprising the crescent-shaped cross section (5).
- Fig. 5: shows an embodiment where the portion (4) of the bristles comprising a crescent-shaped cross section (5) is formed at the end of the bristle opposite to the core and on bristles forming an angle in the range of between 25° to 80°, measured taking the longitudinal axis of the core as a base.

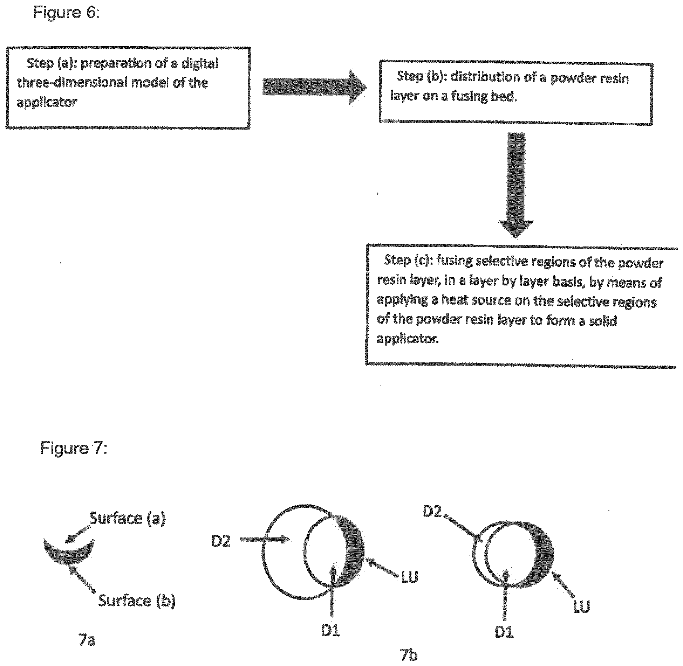

- Fig. 6: shows a flowchart example of the process according to the present invention where the different steps (a), (b) and (c) comprised in said process are shown.
- Fig. 7: shows an example of the definition of the crescent-shaped cross section as explained in the DEFINITIONS section below.

### DEFINITIONS

As used in the specification and claims of this application, the following definitions, should be applied:
"a", "an", and "the" as an antecedent may refer to either the singular or plural unless the context indicates otherwise.

"Crescent-shaped cross section" means that the cross section of the portion of the bristle has a crescent shape which has two major surfaces (a) and (b): one surface depression (a) which is substantially concave and one surface (b) which is substantially convex. Examples of crescent shapes include the curved sickle shape of the waxing moon or the shape of a single curve that is broad in the center and tapers to a point at each end. The crescent-shaped cross section can be defined as a "lune" (LU) that is the relative complement of one disk (D1) in another disc (D2), where they (D1 and D2) intersect but neither is a subset of the other. Based on the fact that D1 and D2 are disks, then D1 - D1 ∩ D2 is a "lune" (LU) as shown in Figure (7). The surface of the "lune" (LU) can be of less than ¾ of the surface of D1, preferably of less than ½ of the surface of D1, more preferably of ¼ of the surface of D1, even more preferably of less than ¼ of the surface of D1.

A "reservoir" (7) in the present invention refers to a small space set back that is formed by the presence of the crescent-shaped cross section comprised on at least one portion of the bristle. The reservoir is generally formed in between each powder resin layer created by the application of the heat source on selective sections of said powder resin layer to form the solid applicator. The inventors have surprisingly found that these reservoirs may be created by controlling the heating process as described later. The size of the reservoir (7) depends on the size of the surface of the "lune" (LU) as explained above.

"Sintering" in the present invention, means a process of compacting and forming a solid mass of material by heat without melting it to the point of liquefaction.

"Integrated to the core" in the present invention means that the bristles are directly linked and chemically or physically bonded to the core and that the bristles have been typically produced in the same process as the core and together with the core. In some embodiments, bristles may be additive manufactured onto a pre-existing core produced by another process, for example, even by injection molding, provided that the materials of the bristle and core are compatible to allow bonding between them.

Numerical values in the present application relate to average values. Furthermore, unless indicated to the contrary, the numerical values should be understood to include numerical values which are the same when reduced to the same number of significant figures and numerical values that differ from the stated value by less than the experimental error of the conventional measurement technique of the type described in the present application to determine the value.

### GENERAL DESCRIPTION OF THE INVENTION

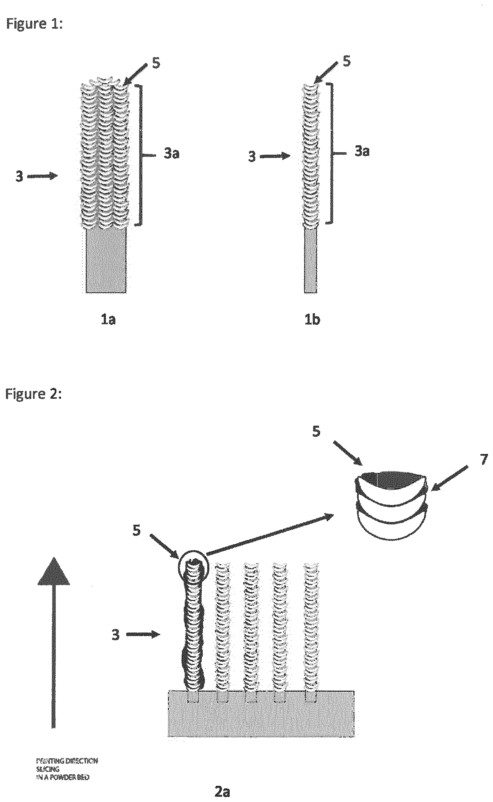

The applicator according to the present invention (not shown here) generally comprises a core of elongated shape that carries bristles which are integrated to the core, the bristles being distributed along the core and axially spaced apart from one another, with some portion having a crescent-shaped cross section (FIG. 1). The term "elongated shape" is not specifically limited and it simply means that the core is longer in the axial direction than in the radial directions. The shape of the cross section of the applicator core is not specifically limited and may be round, hollow round, oval, star-shaped, square, X-shaped or triangular.

The applicator according to the present invention is a cosmetic applicator or a health care applicator.

The cosmetic applicator is not specifically limited and may be a foundation brush, concealer brush, kabuki brush, stippling brush, angled blush brush, powder brush, angled brush, contour brush, highlight fan brush, blending brush, eye liner brush, angled eyeliner brush, eyeshadow brush, nail brush, nail polish brush, nail lacquer brush, bronzer brush, shaving brush, lip brush, mascara brush, all-over eye shadow brush, lash/brow comb/brush, smudger brush, fan brush, or blush brush.

The healthcare applicator is also not specifically limited and it may be a brush for oral health care, for example, a toothbrush or interdental brush, or for mucus membrane or bleaching treatment; or for dermal care, such as prescription medicated skin care dermatology, OTC skin care, cosmetic skin care or cosmeceuticals; or for eye care, such as application on the inside of the eye (e.g. eye drops and ointment application, antibiotics or antimicrobials), or external eye applications (e.g. infections, sty, lashes / brow treatments); or for hair or scalp treatments; a nail, nail-lacquer, or nail-polish brush; or for ear, nasal, foot, rectal or vaginal care of treatment; or for diagnostic treatments or medical sampling; or for diagnostic, grooming, dermal, oral, eye or other healthcare of animals.

The cosmetic and/or healthcare masses in the present invention are not specifically limited and may include mascara, eye shadow, eyeliner, nail lacquer, lip gloss and other lip make-up, toothpaste, bleach, prescription medication, OTC medication, cosmeceuticals, eye drops, eye ointment, antibiotics, antimicrobials, or nail polish.

The bristles of the applicator according to the present invention generally comprise a portion having a crescent-shaped cross section (FIG. 1). The presence of said crescent-shaped cross section provides several advantages over applicators not having this type of bristle. The normal applicators may pick up large volumes of the mass to be applied; however, they may pick up an excess of mass and they may have difficulty to apply the right amount of mass. In contrast, applicators having bristles comprising a crescent-shaped cross section, according to the present invention, have a much superior ability to pick-up and to apply the right volumes of mass on the hair or skin. Due to their specific crescent-shaped cross section, the bristles provide also the effect that the brush not only efficiently picks up, but also retains, a portion of the formulation so that it may subsequently be transferred to the hair or skin in a more even way.

In another embodiment of the applicator according to the present invention, more than one portion of the bristles comprise a crescent-shaped cross section along the bristle, which then provides for reservoirs for mass such as cosmetic or healthcare masses along the length of the bristle. The cosmetic and healthcare mass residing in these reservoirs will not be wiped off during the standard wiping action.

In another embodiment of the applicator according to the present invention, the entire length of the bristle has a crescent-shaped cross section along the bristle, which then provides for reservoirs for mass such as cosmetic or healthcare masses along the complete length of the bristle. The cosmetic and healthcare mass residing in these reservoirs will not be wiped off during the standard wiping action.

In another embodiment of the applicator according to the present invention, the portions of the bristles having a crescent-shaped cross section are distributed over the length of the bristle, preferably uniformly distributed over the length of the bristle. In selected embodiments of the applicator according to the present invention, at least 50, 75 or 90% of the length of bristles have a crescent-shaped cross section. These crescent-shaped cross-sectioned portions provide the just-discussed reservoirs for the cosmetic and healthcare mass or other mass to reside in.

In one embodiment the average cross-sectional area remains relatively constant over the length of the bristle.

The bristles as in Figure 1a, where there are several powder particles linked together forming the crescent-shaped cross sections, is more preferred. This allows to have an easy manufacturing of different diameter of bristles and a better mechanical stability lengthwise of the bristles in the applicator according to the invention.

Each crescent-shape can be typically made of between 1 to 5000 powder particles, preferably between 100 and 2000 powder particles. It is easier to produce cross-sections with crescent shape with a larger number of particles.

In another embodiment of the applicator according to the present invention, some bristles of the applicator according to the present invention may not comprise a crescent-shaped cross section portion. In selected embodiments of the applicator according to the present invention, at least 50, 25 or 10% of all the bristles in the applicator do not comprise a crescent-shaped cross section portion. The presence of bristles without a crescent-shaped cross section portion helps to control the amount of cosmetic and healthcare mass residing in the applicator, and thus allowing the design of a specific applicator, according to a specific mass viscosity, capable of pick-up and apply the right volumes of mass.

In another embodiment, the applicator according to the present invention comprises one resin selected from the group of thermoplastic-based or elastomer-based resins. The thermoplastic-based resin can be selected from the group of polyolefins, polyamides or polyethers. The elastomer-based resin can be selected from the group of thermoplastic-urethanes or thermoplastic-elastomers. These resins can provide at least one of the following properties to the applicator according to the present invention: flexibility, softness, recyclability, durability, light weight.

The present invention also relates to an applicator according to the present invention obtainable, preferably obtained by an additive manufacturing process. The advantage of the additive manufacturing process is that it allows to obtain applicators with well-defined and complex architectures, compared to other methods like for example injection molding process. Examples of additive manufacturing process are Stereolithography and Selective Sintering and Digital Light Processing (DLP) process. The additive Manufacturing process does not require a mold to be fabricated, so it is possible to produce well-defined and complex architectures at an advantageous cost, as such architectures are not being restricted by the molds.

In another embodiment, the applicator according to the present invention, is obtainable, preferably obtained by a Selective Laser Sintering (SLS) process. Selective Laser Sintering (SLS) process is an additive manufacturing technique that uses a laser as the power source to sinter powdered material, aiming the laser automatically at points in space defined by a 3D model, binding the material together to create a solid structure.

The powder resin in raw form is generally a material that is capable of being solidified by Selective Sintering process, in particular by means of applying a heat source.

In another embodiment of the present invention, the power resin used in the process according to the invention comprises one resin selected from the group of thermoplastic-based or elastomer-based resins.

Examples of resins comprised in the powder resin used in the process according to the present invention are polyolefin, polyamide, polyether, polyetherketone, polyphenylsulfone. Preferred resins are thermoplastic-polyurethane, thermoplastic-elastomer, polypropylene or polyethylene. These resins can provide at least one of the following properties to the applicator according to the present invention: flexibility, softness, recyclability, durability, light weight.

In another embodiment of the present invention, the powder resin in raw form further comprises an additive element. Examples of additive elements are clays, metal particles.

In the process according to the present invention, the step of preparation of a digital three-dimensional model of the applicator is generally carried out by means of a computer-assisted software.

In the process according to the present invention, the distribution of a powder resin layer on a fusing bed is generally carried out based on the digital three-dimensional model previously prepared.

In the process according to the present invention, the fusing of selective regions of the powder resin layer, in a layer by layer basis, is generally carried out based on the digital three-dimensional model previously prepared and by means of applying a heat source on the selective regions of the powder resin layer to form a solid three-dimensional applicator. The solidification of the selective regions of the powder resin layers, in a layer by layer basis, is generally carried out by means of a heat source, preferably a heat source comprising a laser.

In the process according to the present invention, the heat source applied on the selective regions of the powder resin layers to form a solid three-dimensional applicator, has a power in the range of 10 to 35 W, preferably in the range of 12 to 30 W. This range of heat power applied on the selective regions of the powder resin has been surprisingly found to advantageously allow one to better define the crescent-shaped cross section of the bristles comprised in the applicator according to the present invention.

In one embodiment of the present invention, the heat source applied on the selective regions of the powder resin layers to form a solid three-dimensional applicator, is a laser having a power in the range of 10 to 35 W, preferably in the range of 12 to 30 W. This range of laser power applied on the selective regions of the powder resin is advantageous since it allows to better define the crescent-shaped cross section of the bristles comprised in the applicator according to the present invention. The laser heat source is preferably an ultraviolet laser source or an infrared laser source.

The architectures of the applicator to be produced by the process according to the present invention, are generally well-defined and complex because said applicator is produced by solidifying successive slices of the powder resin.

The present invention also relates to a cosmetic and/or healthcare package comprising a container and the applicator according to the present invention, preferably wherein the container contains a cosmetic or a health care mass, most preferably a mascara mass.

The container comprised in the cosmetic or health care package can comprise or can be made of the following materials, metal, wood, thermoplastic-based resin or elastomer-based resin.

Examples of container comprised in the cosmetic or health care package according to the present invention are bottles, flasks and tubes.

Examples of resins comprised in the container comprised in the cosmetic or health care package according to the invention, are polyolefin, polyamide, polyether, polyetherketone, polyphenylsulfone. Preferred resins are thermoplastic-polyurethane, thermoplastic-elastomer, polypropylene or polyethylene. These resins can provide at least one of the following properties to the container comprised in the cosmetic or health care package according to the present invention: flexibility, softness, recyclability, durability, light weight.

The present invention also relates to the use of the applicator according to the present invention, in the application of a cosmetic or healthcare product on eyelashes, eyebrows, eyelids, lips, hair, cheeks, nails or skin.

One skilled in the art will understand that the combination of the subject matters of the various claims and embodiments of the invention is possible without limitation in the invention to the extent that such combinations are technically feasible. In this combination, the subject matter of any one claim may be combined with the subject matter of one or more of the other claims. In this combination of subject matters, the subject matter of any one applicator claim may be combined with the subject matter of one or more other applicator claims. One skilled in the art will understand that such combinations may also pertain to package claims, process claims, use claims or their combinations with applicator claims. By way of example, the subject matter of any one claim may be combined with the subject matters of any number of the other claims without limitation to the extent that such combinations are technically feasible.

One skilled in the art will understand that the combination of the subject matters of the various embodiments of the invention is similarly possible without limitation in the invention. For example, the subject matter of one of the above-mentioned applicator embodiments may be combined with the subject matter of one or more of the other above-mentioned package embodiments or vice versa without limitation so long as technically feasible.

While various embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

### Reference Numbers

1 Applicator.
2 Core.
3 Bristle.
3a Extension of the bristle (3).
4 Portion of the bristle (3).
5 Crescent-shaped cross section.
6 Mass.
7 Reservoir.

### Reference Signs

AM = Additive Manufacturing
SLS = Selective Laser Sintering
OTC = Over the Counter

## Claims

1. An applicator (1) for applying a cosmetic and/or healthcare mass onto the hair or skin, comprising a core (2) of elongated shape that carries bristles (3) which are integrated to the core, the bristles being distributed along the core and axially spaced apart from one another, wherein a portion (4) of the bristles comprises a crescent-shaped cross section (5).

2. Applicator according to claim 1, wherein the applicator comprises one resin selected from the group of thermoplastic-based or elastomer-based resins, wherein preferably the thermoplastic-based or the elastomer-based resin is a polyolefin, a polyamide, a polyether, a polyetherketone or a polyphenylsulfone; more preferably a thermoplastic-polyurethane, a thermoplastic-elastomer, a polypropylene or a polyethylene.

3. Applicator according to any one on claims 1 or 2 obtainable, preferably obtained, by an additive manufacturing process.

4. Applicator according to claim 3, wherein the additive manufacturing process is a Selective Sintering process, preferably a Selective Laser Sintering process.

5. Additive manufacturing process for producing the applicator according to any one of claims 1 to 4, comprising the steps of:
a) preparation of a digital three-dimensional model of the applicator,
b) distribution of a powder resin layer on a fusing bed,
c) fusing selective regions of the powder resin layer, in a layer by layer basis, by means of applying a heat source on the selective regions of the powder resin layer to form a solid applicator, wherein the heat source applied on the selective regions of the powder resin layers has a power in the range of 12 to 30 W.

6. Additive manufacturing process according to claim 5, wherein the heat source applied on the selective regions of the powder resin layer to form a solid three-dimensional applicator, is a laser source, preferably an ultraviolet laser source or an infrared laser source.

7. Additive manufacturing process according to any one of claims 5 or 6, wherein the powder resin comprises one resin selected from the group of thermoplastic-based or elastomer-based resins, wherein preferably the thermoplastic-based or the elastomer-based resin is a polyolefin, a polyamide, a polyether, a polyetherketone or a polyphenylsulfone; more preferably a thermoplastic-polyurethane, a thermoplastic-elastomer, a polypropylene or a polyethylene.

8. A cosmetic and/or healthcare package comprising a container and the applicator (1) according to any one of claims 1 to 4, preferably wherein the container contains a cosmetic or a health care mass, most preferably a mascara mass.

9. Use of the applicator according to any one of claims 1 to 4 in the application of a cosmetic and/or healthcare mass or product on eyelashes, eyebrows, eyelids, lips, hair, cheeks, nails or skin.
